Europäisches Patentamt

European Patent Office

Office européen des brevets

(19)

(11) **EP 0 841 850 B1**

(12) **EUROPEAN PATENT SPECIFICATION**

(45) Date of publication and mention
of the grant of the patent:
**24.10.2001 Bulletin 2001/43**

(21) Application number: **96908609.9**

(22) Date of filing: **27.02.1996**

(51) Int Cl.[7]: **A01M 25/00**, B65D 75/58

(86) International application number:
**PCT/US96/02843**

(87) International publication number:
**WO 97/04651 (13.02.1997 Gazette 1997/08)**

(54) **CONTAINER AND METHOD FOR DISPENSING READY-TO-USE PESTICIDES**

BEHÄLTER UND VERFAHREN ZUR ABGABE VON GEBRAUCHSFERTIGEN PESTIZIDEN

RESERVOIR POUR DISTRIBUTION DE PESTICIDES PRETS A L'EMPLOI ET PROCEDE ASSOCIE

(84) Designated Contracting States:
**DE FR GB IT**

(30) Priority: **02.08.1995 US 510463**

(43) Date of publication of application:
**20.05.1998 Bulletin 1998/21**

(73) Proprietor: **ECOLAB INC.**
**Saint Paul Minnesota 55102 (US)**

(72) Inventors:
• **RYTI, Marlyn, V.**
**Golden Valley, MN 55427 (US)**

• **NELSON, Thomas, D.**
**Maplewood, MN 55119 (US)**
• **ANDERSON, Douglas, G.**
**Lakeville, MN 55044 (US)**

(74) Representative: **Stuttard, Garry Philip**
**Urquhart-Dykes & Lord**
**Tower House**
**Merrion Way**
**Leeds LS2 8PA (GB)**

(56) References cited:
**AU-B- 550 138      GB-A- 2 186 260**
**US-A- 4 644 732      US-A- 5 169 251**
**US-A- 5 344 018**

EP 0 841 850 B1

**Description**

**Field of the Invention**

The invention is directed to a container and method for dispensing ready-to-use pesticides for the purposes of pest management. In particular, the invention is directed to a container and method for manually dispensing ready-to-use pesticides in the form of viscous, thickened, semi-solid flowable compositions.

**Background of the Invention**

Conventional pest management technologies have traditionally relied upon broadcast spraying of liquids, where a pesticide concentrate is diluted into liquid form and sprayed over an area to control pests. However, broadcast spraying is not a particularly precise form of depositing a pesticide, which often results in overspray (i.e., wasted product) and less discrete placement of the product within (and outside of) the desired area to be sprayed.

Based upon many of these concerns, pest management technology has attempted to move away from broadcast spraying of diluted forms of concentrates to a more discrete placement of "ready-to-use" pesticides (e.g., baits, repellants, and contact-based pesticides). A desirable ready-to-use pesticide must be durable and physically and chemically stable to be effective at managing pests. Further, pesticide baits should be attractive and palatable to pests for effective pest management.

It is also important that the dispensing of a ready-to-use pesticide be both precise and easy to perform for an operator. In fact, it is particularly desirable for an operator to be able to dispense a ready-to-use pesticide using a single hand, to facilitate dispensing into tight, hidden and/or dark areas with limited access (i.e., "cracks and crevices").

Some ready-to-use pesticides (e.g., those provided in gel or paste form) have been dispensed via syringes or caulk-type guns. Others (e.g., those provided in powder or dust form) have been dispensed via tube or bulb dispensers. However, separate dispensers are often difficult to use in cracks and crevices and the like, and further add to the cost to the overall pest management system.

Many dispensers also are limited to dispensing relatively low viscosity liquid pesticide compositions and powder pesticide compositions due to the forces required to dispense thicker gels and pastes, which would either require a larger and more bulky dispenser or would become burdensome and physically tiring to an operator. Larger and more powerful dispensers are typically not cost effective and are often more difficult to use in cracks and crevices. Also, more powerful dispensers would most likely induce some run-on after dispensing operations, thereby wasting product.

However, it has been found that some ready-to-use pesticides provided in thicker, semi-solid flowable compositions are often more effective than less viscous liquids and powders because the thicker compositions tend to be more palatable to some pests such as cockroaches. For example, some ready-to-use pesticides are available in a paste form and provided in a tub container. The ready-to-use pesticide paste is dispensed manually using a gloved hand or putty knife. However, using ready-to-use pesticide paste in this manner is messy and can result in significant soiling of an operator's gloves and clothing, which poses significant environmental and safety concerns and may make a professional operator appear messy and less professional to customers. In addition, the ready-to use pesticide paste is difficult to discretely place, and often a significant amount of product is wasted due to over-application of product and soiling of the tub container and the operator's gloves and clothing.

Previous dispensers, such as those used to dispense liquid or powder pesticides, are not suitable for dispensing this type of paste composition. For example, U.S. Pat. No. 5,169,251 to Davis is directed to a dispenser for a variety of liquid or powder compositions. The dispenser is essentially a glove which fits on an operator's hand, and includes a packet positioned to be squeezed in an operator's palm. Powder materials are dispensed through holes throughout the palm side of one embodiment. In other embodiments, liquid materials may instead be dispensed through narrow conduits leading to the fingertips.

Numerous food products, personal care products, household products, etc., are listed as being usable with the Davis dispenser, including liquid and powder pesticides and repellents. One advantage of these types of dispensers is that relatively discrete and controlled product placement may be obtained due to their single hand operation and the placement of the dispensing ports (at least for liquid materials) proximate the fingertips. However, the dispensers are relatively complex and would be difficult and costly to manufacture.

Moreover, the Davis dispenser is not designed for delivery of thick, semi-solid flowable compositions. The conduits shown in the Davis patent are only capable of dispensing liquids with relatively low viscosities (e.g., about 200 gm/(cm/sec) (20,000 cps) or less). The Davis dispenser is not constructed to withstand the high pressures needed to dispense thick, semi-solid flowable compositions through the narrow conduits. Undesired operator fatigue also results from the excessive force needed to dispense thicker compositions through the narrow conduits.

US-A-5344018 discloses a container for dispensing fluent materials such as pesticidal formulations. There is no disclosure of or suggestion towards reclosable containers with a finger pocket to assist pesticide delivery.

GB-A-2186260 discloses a container for dispensing foods of semi-liquid formulation.

Therefore, a substantial need exists in the art for a precise and economical manner of dispensing the more effective thicker, semi-solid flowable ready-to-use pesticide compositions in a controlled, discrete and cost effective way. In addition, a substantial need exists in the art for a manner of dispensing ready-to-use pesticide compositions that is both easy and simple to use.

Summary of the Invention

The invention addresses these and other problems associated with the prior art in providing a container and method for dispensing ready-to-use pesticide wherein a flexible package filled with a thick, semi-solid flowable ready-to-use pesticide composition is manually gripped, oriented proximate a pesticide application area, and squeezed to controllably dispense the pesticide composition through an opening in the flexible package and onto the pesticide application area.

The flexible package used in preferred embodiments of the invention is a cost effective and convenient container, which is readily suitable for single hand dispensing, thereby permitting the application of pesticides in cracks and crevices where pests are known to frequent. Moreover, the dispensing of pesticides may be performed in a simple and easy manner, without inducing operator fatigue since an operator is not required to exert an excessive force to dispense the pesticide from the flexible package. In addition, the flexible package permits controlled and discrete product placement with a single hand and in preferred embodiments permits a finger on the same hand to be used to better guide the placement of product during dispensing. The other hand is free to hold a flashlight, maintain balance, etc.

Therefore, in accordance with one aspect of the invention there is provided a method of dispensing a ready-to-use pesticide composition (12), the method comprising the steps of:

(a) manually gripping a flexible package (10) having an opening (30) for a ready-to-use pesticide composition, the flexible package housing the ready-to-use pesticide composition, the pesticide composition being in the form of a thick semi-solid flowable composition having a viscosity between about 747 and 15,200 gm/(cm-sec) (74700 and 1,520,000 cps), wherein the flexible package is reclosable;
(b) orienting the opening in the flexible package proximate a pesticide application area (5);
(c) squeezing the flexible package to dispense the pesticide composition through the opening and onto the application area;
(d) directing the pesticide composition from the opening using a finger (2) on the hand (11) gripping the flexible container; and
(e) orienting the finger in a pocket, pouch or band (40) disposed proximate the opening in the flexible package.

In accordance with another aspect of the invention there is provided a ready-to-use pesticide container comprising:

(a) a flexible package (10), being sized to be manually gripped by an operator and being reclosable including at least one wall defining an interior chamber (13) and a dispensing port (30) in fluid communication with the interior chamber and an external pocket, pouch or band (40) disposed proximate the dispensing port.
(b) a ready-to-use pesticide composition (12) disposed within the interior chamber of the flexible package, the pesticide composition being in the form of a thick semi-solid flowable composition having a viscosity of between about 747 and 15,200 gm/ (cm-sec) (74,700 and 1,520,000 cps);
wherein the dispensing port is positioned on the flexible package such that a finger (2) on an operator's hand (1) may be received in the pocket while the package is being manually gripped by the operator's hand.

These and other advantages and features, which characterize the invention, are set forth in the claims annexed hereto and forming a further part hereof. However, for a better understanding of the invention, and the objectives and advantages obtained by its use, reference should be made to the figures, and to the accompanying descriptive matter, in which there is described preferred embodiments of the invention.

FIGURE 1 is a top plan view of a preferred ready-to-use pesticide container consistent with the principles of the invention.

FIGURE 2 is a side elevational view illustrating the use of the container of Fig. 1 (with the finger pocket omitted for the sake of clarity).

FIGURE 3 is a fragmentary perspective view of another pesticide container consistent with the principles of the invention, showing an external pocket disposed thereon.

FIGURE 4 is a fragmentary bottom plan view of another pesticide container consistent with the principles of the invention, showing a removable closure for opening the container.

FIGURES 5a-5f are top plan views of additional pesticide containers consistent with the principles of the invention, showing several alternate shapes. Fig. 5a illustrates a triangular shaped container; Fig. 5b illustrates a rectangular container; Fig. 5c illustrates a trapezoidal container; Fig. 5d illustrates a diamond shaped container; Fig. 5e illustrates a pentagonal container; and Fig. 5f illustrates a curved polygon shaped container. The finger pocket is omitted for clarity.

FIGURE 6 is a top plan view of another pesticide container consistent with the principles of the invention, wherein a single sheet of film is sealed with a fin seam.

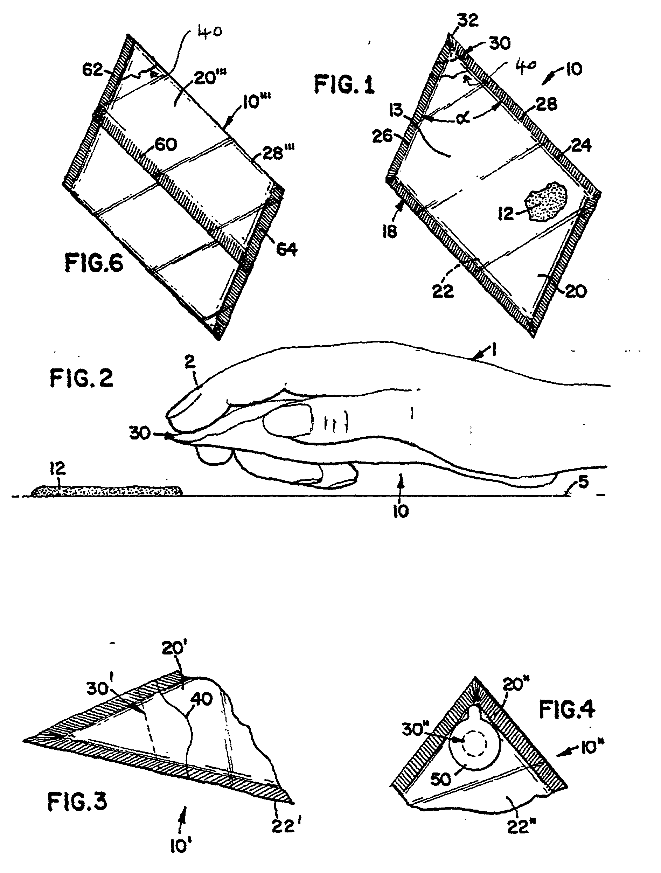

Turning to the figures (wherein like parts are denoted by like numbers throughout the several views) Fig. 1 shows a flexible and ready-to-use pesticide container 10 consistent with the principles of the invention. Container 10 generally includes a pesticide composition 12 housed within a flexible package 18.

Pesticide composition 12 is preferably a viscous, thick, semi-solid flowable composition preferably having a viscosity of between about 747 and 15,200 gm/(cm-sec) (74,700 and 1,520,000 cps) which is the viscosity range of several commercially available pesticide compositions suitable for use with the present invention.

In determining the viscosity of a pesticide composition for use with the invention, the following procedure is preferably performed: A pesticide composition is added to a 3-1/2 inch (8.9 cm) diameter straight wall container to a depth of 2-1/2 inches (6.4 cm). Viscosity of the composition is measured using a Brookfield T-bar spindle (typically an A, C or E spindle, depending upon the range of the viscosity) inserted into a Brookfield DV-I+ Viscometer. The spindle is set at an initial depth of 1/4 inch (0.64 cm) below the composition surface. Shear is applied to the composition and the viscosity is measured while turning the spindle 10 revolutions per minute at a dive rate into the composition of 7/16 inch (1.11 cm) in 30 seconds. Dive is provided by a Brookfield Helipath Stand Model D. The composition viscosity is given on the Brookfield DV-I+ Viscometer's digital display. The viscosity of the composition sample is preferably determined three times with the average being the reported composition viscosity.

Pesticide composition 12 is preferably a ready-to-use composition. The ready-to-use pesticide composition is suitable for direct application and use in areas of the home and other buildings where pests such as cockroaches frequent, especially cracks and crevices.

As discussed above, the invention is directed to dispensing thickened semi-solid flowable compositions which have been found to be particularly palatable to pests. Accordingly, suitable compositions for use with the invention may include generally any pesticide (e.g., insecticide, rodenticide, avicide, etc.) capable of being formulated into a suitable texture and viscosity, such as in the form of a paste, a gel, an emulsion, a suspension, a wax, etc. It is also preferable that the pesticide composition be able to maintain its shape when applied to a surface, either due to its poor flowing characteristics, or due to its ability to "set-up" later by drying or chemically reacting.

A pesticide composition suitable for use with the invention will typically include an active ingredient, or killing agent, coupled with inert ingredients that provide a suitable attractability, durability, stability, palatability, viscosity, etc. for the composition. Included as examples of active ingredients are compounds from the following classes of insecticides:

1 - organophosphates, e.g. acephate, chlorpyrifos or diazinon;
2 - mineral acids and their salts, e.g. boric acid;
3 - carbamates, e.g. propoxur or bendiocarb;
4 - pyrethroids, e.g. cyfluthrin;
5 - amidinohydrazones, e.g. hydramethylnon;
6 - avermectins, e.g. abamectin;
7 - chlorinated hydrocarbons, e.g. lindane, and combinations of the above with known synergists, such as carbamates or pyrethroids, e.g. bendiocarb may be combined with piperonyl butoxide.

For rodenticides, examples of active ingredients include diphacinone, bromadiolone, chlorophacinone, cholecalciferol, warfarin, zinc phosphide, etc. For avicides, examples of active ingredients include 4-aminopyridine.

Inert ingredients for use with the preferred pesticide compositions typically include water or another solvent which acts as a diluent; food components which act as a diluent and provide attraction and feeding stimulation; and thinning or thickening agents which act as a diluent and provide the desired viscosity for the composition. Food components may include carbohydrates such as starches and sugars, as well as proteins and fats. A suitable thinning agent may be, for example, water, and suitable thickening agents may be, for example, starch or xanthan gum.

Several particularly suitable types of ready-to-use pesticide compositions are commercially available. One example is Stapleton's Magnetic Roach Food pesticide made by Blue Diamond Exterminating and Manufacturing Company, which contains 33.3% boric acid and 66.7% inert ingredients. Another example is Siege gel insecticide made by American Cyanamid Co., which contains 2% hydramethylnon and 98% inert ingredients.

Other pesticide compositions can be made ready-to-use at desired viscosities prior to placement in the package. An example is Tempo WP pesticide, made by Miles Inc., diluted to cyfluthrin use concentrations of 0.05% to 0.1% and desired viscosities with water and a thickening agent such as xanthan gum.

Other ready-to-use pesticide compositions can be thickened or thinned to desired viscosities prior to placement in the package. An example is Terro Ant Killer pesticide, made by Senoret Chemical Co., Inc. and containing 5.40% sodium tetraborate decahydrate (Borax) and 94.60% inert ingredients, thickened to desired viscosities with xanthan gum.

Other pesticide compositions, which have suitable textures and other properties that are sufficiently palatable to pests, may also be used.

Flexible package 18 houses the pesticide composition 12 in an interior chamber 13 defined by at least one wall therein. Interior chamber 13 in one preferred flexible package is preferably defined by a pair of opposing sheets of polymer film 20, 22 which are sealed in any known manner (e.g., by heat sealing or ultrasonic sealing) about a perimeter 24 thereof to form opposing walls and a plurality of edges, such as edges 26 and 28. The material used for sheets 20 and 22 is preferably PET, polyethylene, polyvinyl chloride, a metallized polymer such as a mylar foil, other polymers, etc., as well as combination laminates of one or more of the above materials. Any other material or combination of materials which gives the necessary permeability, strength, flexibility and durability, may also be used. Further, the material may be clear or opaque.

Flexible package 18 is somewhat similar in concept to the packaging used in single use containers for less viscous liquids such as food and personal products (e.g., ketchup, mustard, etc.). However, such packaging has not been used in the area of pest management for dispensing ready-to-use pesticide compositions and the like. Moreover, flexible package 18 is not a single use package, since greater than a single dosage of pesticide composition may be housed within the package to permit multiple dispensing operations from a single package.

Other manners of constructing flexible packaging for housing a liquid or paste composition within an internally defined chamber may also be used in the alternative. For example, "edges" defining a perimeter may be formed at the junction or seal of two or more members, or may be defined where a single sheet overlaps or folds over upon itself to form opposing walls. In addition, a chamber may be defined even when distinct edges are not readily defined in a package, e.g., in a balloon-shaped package having a single, generally continuous wall.

In addition, different numbers of sheets may be used, such as where a single sheet is joined using a single fin seam. For example, Fig. 6 shows an alternate pesticide container 10''' having a single sheet 20''' that is sealed along one side by a fin seam 60, and along its ends by seams 62 and 64. Container 10''' also illustrates that an "edge" may be defined not only when a separate seal or junction is formed between multiple members, but also when a single sheet of film is folded over itself as along edge 28'''. Other manners of joining one or more sheets to form a flexible package may be used, such as by using adhesives.

Returning to Fig. 1, flexible package 18 includes a dispensing port 30 preferably formed at a corner 32 thereof, e.g., at the intersection of a pair of converging edges 26, 28, and which is in fluid communication with interior chamber 13. Alternatively, the dispensing port may be located along one of the edges, or at any location on either of the sheets 20, 22.

Dispensing port 30 is preferably closed prior to use, wherein the port must first be opened to dispense material from the container. Several manners of opening dispensing port 30 may be used consistent with the invention. For example, as shown in Fig. 1, port 30 may be opened by removing corner 32 to form an aperture or opening between sheets 20 and 22 at port 30, e.g., by cutting or tearing off the corner. It will be appreciated that one or more precut perforations may be included proximate the port to facilitate opening the port. It will also be appreciated that an aperture may be formed in only one of the sheets, e.g. by forming a hole or cutting a slit in one of the sheets proximate the corner.

In addition, as shown in Fig. 4, a separate closure may be used to cover an aperture, e.g., closure or cover 50 on pesticide container 10''. Cover 50 may be disposed over an opening 30'' formed in one of the sheets 20'', 22''. An adhesive may be used to removably secure cover 50 to one of the sheets. A tab may also be provided on cover 50 to assist an operator in removing the cover. In addition, it may be possible to permanently secure a portion of the cover to one of the sheets such that the cover is merely pulled away, but not completely removed, from the container 10''. Other covers/closures and manners of forming an aperture or dispensing port in a flexible package may also be used in the alternative.

Returning to Fig. 1, dispensing port 30 may be formed having different opening sizes (or diameters), e.g., by cutting off more or less of corner 32. Smaller opening sizes may be preferred for less viscous materials to reduce dripping and allow for more discrete placement, while larger opening sizes may be preferred for more viscous materials to reduce the amount of force an operator must apply to dispense the materials to a more comfortable level.

To limit the fatigue experienced when dispensing through the preferred containers, the preferred dispensing port diameter (e.g., where the diameter may be measured by inserting different sized cylindrical rods into the port and using the diameter of the largest rod that will fit as the diameter of the port) is about 0.326 in. (0.828 cm) or greater for compositions having viscosities at the high end of the preferred range, about 15,200 gm/(cm-sec) (1,520,000 cps), with smaller diameters being acceptable for less viscous materials (e.g., for compositions with viscosities of about 747 gm/(cm-sec) (74,700 cps), a port diameter of about 0.085 in. (0.22 cm) or greater is acceptable). The relationship between viscosity and dispensing port diameter is discussed in greater detail below with respect to Working Example II.

Moreover, a dispensing port diameter of about 0.344 in. (0.874 cm) or less has been found to provide sufficiently discrete product placement. Materials dispensed through larger diameters are easily handled by the preferred containers, but may tend to be more bulky and less discrete.

It will be appreciated that other port diameters may be used in other applications depending upon composition viscosity, discreteness of product placement, effort to dispense, etc. Moreover, it will be appreciated that the permissible viscosity range of compositions suitable for use in the preferred containers may be made broader than those disclosed herein simply by varying the size of the dispensing port.

Preferred containers may be single use containers for dispensing single applications of pesticide composition. More preferably, the containers house enough pesticide composition to dispense multiple applications from each container. The containers are reclosable, e.g., by folding a portion of the container over the dispensing port and taping, clipping or otherwise securing the container closed, such that the container may be used at a later time if only a portion of the pesticide composition is used.

Figs 1, 3 and 6 it is show the external pocket, pouch or band to receive a finger, e.g., finger 2, to increase the controllability of application. As shown in figure 3, a container 10' includes an external pocket or band 40 formed from a separate sheet of polymer film which is sealed proximate port 30', and contiguous and overlapping with sheets 20' and 22'. The pocket may be sealed from port 30' to keep finger 2 from contacting any pesticide composition during the dispensing. Alternatively, the end of the pocket may be opened concurrently with the opening of port 30' by tearing, cutting or otherwise removing of the corner of the package forming a band. Moreover, while the preferred manner of forming pocket 40 is to provide an additional sheet of polymer film overlapping one of the sheets 20' and 22', it will be appreciated that other manners of manufacturing an external pocket or pouch may also be used.

Fig. 2 generally illustrates the method of dispensing ready-to-use pesticide composition using container 10 with finger pocket 40 omitted for clarity. As shown in this figure, container 10 is sized to be gripped by an operator's hand 1. To dispense product using container 10, the container must be opened as described above, then container 10 is be manually gripped and oriented by an operator to dispose port 30 proximate the pesticide application area to which the pesticide composition is to be applied, such as surface 5. The application area may include floors, corners, walls, cracks, crevices, etc., and especially dark and/or confined places where many pests such as cockroaches are known to frequent.

To dispense pesticide composition from container 10, an operator simply squeezes the container in the palm of hand 1, thereby generating pressure and ejecting pesticide composition through dispensing port-30 and onto the application area, as illustrated by reference numeral 12 in Fig. 2. As is also shown in this Fig., the controlled application of the pesticide composition may be facilitated by gripping container 10 in such a manner to orient port 30 proximate one of the operator's fingers, such as index finger 2. This permits an operator to direct dispensing port 30 in a very controllable manner, thereby permitting very precise and accurate application of the pesticide composition while the operator is squeezing the container. This is in contrast to conventional tub or jar containers where a significant amount of product may be wasted on containers, gloves and clothing, as well as due to excess product application.

Due to the deformability of the package, it will be appreciated that while the operator grips the container, the operator can also use his or her fingers to manipulate the pesticide composition within the package to orient it proximate the dispensing port as more composition is used up. In fact, given the simple design of the container, it is believed that greater than 95% of the composition originally provided in the container may be used, thereby minimizing the amount of product left in an "empty" container. A used container, with any residual composition, is readily disposable and does not waste a significant amount of packaging material or pesticide composition, thereby minimizing waste and maximizing the cost effectiveness of the container.

Returning to Fig. 1, it will be seen that the preferred flexible package 18 is parallelogram-shaped, with a corner formed by a pair of converging edges 26 and 28. Due to controllability concerns it is preferable for edges 26 and 28 to form an angle $\alpha$ which is less than 90°, e.g., about 60°. However, it is also important to provide a large enough angle, e.g., greater than 30°, to minimize the amount of force required to dispense the poor flowing paste composition from the container.

As a result of the high viscosity of the pesticide composition, smaller and narrower openings tend to require too much effort to squeeze the pesticide composition out of port 30. To this extent, it is also preferable to minimize or eliminate any "conduit" effects as a result of having closely spaced and substantially parallel edges proximate the port. While a conduit may be formed proximate port 30, it is preferable to keep the edges of the conduit relatively short and spaced relatively far from one another to minimize the effort required to eject pesticide composition through the port.

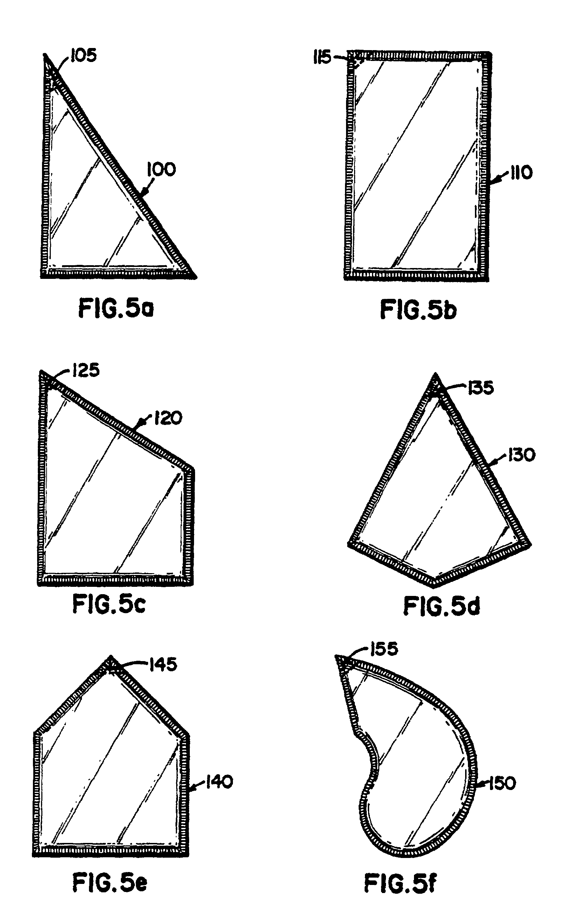

The parallelogram shape defined by perimeter 24 of container 10 in Fig. 1 is preferred due to its convenience to hold and dispense, and its relatively good fit into an operator's hand. It is also convenient to manufacture this type of shape since a plurality of such containers may be formed in strips due to the conforming angles of the opposing edges on the perimeter of this shape. However, it will be appreciated that a myriad of other shapes, with linear and/or curved edges, may also be used. Some alternate shapes are illustrated in Figs. 5a-5f in which the finger pocket is omitted for clarity.

For example, different triangular forms may be used, such as container 100 having dispensing port 105 as shown in Fig. 5a. In addition, different rectangular shapes may be used, such as container 110 having port 115 as shown in Fig. 5b. Further, different trapezoidal shapes, such as container 120 including port 125 as shown in Fig. 5c, may also be used. Other shapes, including diamond shapes (container 130 with port 135 as shown in Fig. 5d) and pentagon shapes (container 140 with port 145 as shown in Fig. 5e) may also be used. Moreover, different curved polygon shapes, such as illustrated in Fig. 5f by container 150 having port 155, may also be used to better conform to an operator's hand.

Different sizes and shapes may be preferred based upon comfort, convenience, and manufacturability. Accordingly, various other shapes may also be used consistent with the invention.

The preferred container and method have several unique advantages in pest management. For example, the preferred container permits precise and accurate application of discrete amounts of pesticide composition to be performed using a single hand, thereby permitting relatively easy and convenient pesticide composition application in a wide variety of applications, particularly in dark and/or hard to reach cracks and crevices. The single hand operation also leaves the operator's other hand free for balancing or holding a flashlight, for example. The preferred container is also clean and relatively unobtrusive. In addition, the design of the container results in a minimal waste of product and of packaging material when the container is used up. Also, while the preferred container is preferably disposable consistent with its comparatively low cost and complexity, it will also be appreciated that the preferred containers may be reusable and refillable if desired.

Therefore, it will be appreciated that the invention provides a container and method for dispensing ready-to-use pesticide compositions which is significantly easier and more controllable than conventional dispensers. As numerous changes and modifications may be made to these preferred embodiments without departing from the scope of the invention, the invention therefore resides in the claims hereafter appended.

The following working examples illustrate the superior operation of the preferred ready-to-use pesticide container compared to conventional dispensers.

Working Example I

A preferred pesticide container consistent with the invention was constructed in a parallelogram shape, with a dispensing port formed in a 60° corner and having a diameter of about 0.136 inch (0.345 cm). In addition, a container similar in construction to that disclosed in U.S. Patent No. 5,169,251 to Davis was constructed, having only a single conduit coupled to a reservoir and terminating in a 0.136 in. (0.345 cm) diameter dispensing port.

Various test sample materials having viscosities in the range of about 1.6 gm/(cm-sec) (160) to about 24,000 gm/(cm-sec) (2,400,000 cps) (measured in the preferred manner described above) were placed in these containers. Test subjects attempted to dispense the materials from the respective containers by gripping the containers in a single hand and squeezing the containers using the single hand, as would be the case in the preferred manner of operation for each container. The test subjects were then polled to determine: (1) whether they were even able to dispense each material from each container; and (2) if they were able to dispense a particular material from a container, whether dispensing the material caused fatigue.

By "fatigue", what is meant is a condition where the dispensing of a composition from a container required what the test subject considered to be an uncomfortable amount of effort, either due to difficulty in keeping his or her hand still while compressing the container (resulting in inaccurate product placement) or due to actual physical discomfort or pain as a result of exerting excessive force on the container for prolonged periods of time. For this example, fatigue was based upon a test subject's subjective determination of whether fatigue would result after four hours of continuous use (i.e., using the container in a normal manner to dispense discrete amounts of pesticide composition throughout a residence or facility for about a four hour period). Whether dispensing a composition causes fatigue is important because any excessive effort on the part of a professional operator may often encourage the operator to under-dispense, or even fail to dispense, the amount of pesticide composition necessary for effective pest management. Similarly, residential consumers would not favor a product if dispensing the product required too much effort or was uncomfortable to use.

Table I illustrate the results of the above-described test procedure for the preferred containers.

Table I:

| Preferred Container | | | |
|---|---|---|---|
| *Test Sample* | *Viscosity gm/(cm-sec)/ (cps)* | *Able to Dispense?* | *Fatigue?* |
| 1 | 1.6 (160) | Yes | No |
| 2 | 222.4 (22,240) | Yes | No |
| 3 | 235.2 (23,520) | Yes | No |
| 4 | 403.2 (40,320) | Yes | No |
| 5 | 752 (75,200) | Yes | No |
| 6 | 1,034.67 (103,467) | Yes | No |
| 7 | 1,754.67 (175,467) | Yes | No |
| 8 | 2,690,67 (269,067) | Yes | No |
| 9 | 3,058.67 (305,867) | Yes | Yes |
| 10 | 15,640 (1,564,000) | Yes | Yes |
| 11 | 24,226.66 (2,422,666) | Yes | Yes |

The preferred containers were able to dispense all of the materials in the test. For samples 1-4, it was found that the materials tended to be runny and drip out of the container, although a smaller dispensing port would most likely remedy this situation. Samples 1-8 were capable of being dispensed without operator fatigue; however, samples 9-11 were found to be difficult to dispense and required too much operator effort. As illustrated in Working Example II (below), more viscous sample materials such as samples 9-11 may still be dispensed with the preferred containers simply by forming larger dispensing ports in the containers.

In contrast, the Davis containers were only able to dispense samples 1-5, as the remaining samples required too much force to dispense than the subjects were capable of generating in a single hand. Of those that could be dispensed in the Davis containers, samples 2-4 were found to induce operator fatigue due to the excessive forces required to dispense the materials.

Working Example II

To illustrate the ability of the preferred containers to dispense more viscous materials by varying the size of the dispensing port, several test samples having viscosities in the range of about 108,000 to 2,069,333 cps were placed in preferred pesticide containers similar to those used in Working Example I above, and the containers were opened with increasing dispensing port diameters for each test sample until two test subjects found that certain diameters did not or would not induce fatigue over a four hour period for particular test samples. This test first illustrated that higher viscosity materials could be suitably dispensed with the preferred containers simply by increasing the dispensing port diameters. This test also illustrated that a general relationship exists between the viscosity of a material and the minimum port diameter that permits fatigue-free dispensing. For example, the minimum dispensing port diameters providing fatigue-free dispensing for each test sample are shown in Table III.

Table III:

| Viscosity vs. Diameter of Dispensing Port | | | |
|---|---|---|---|
| *Test Sample* | *Test Subject* | *Viscosity (cps)* | *Min. Diameter (in.)* |
| 1 | A | 108,000 | 0.099 (0.251 cm) |
| 1 | B | 108,000 | 0.099 (0.251 cm) |
| 2 | A | 364,000 | 0.136 (0.345 cm) |
| 2 | B | 364,000 | 0.136 (0.345 cm) |
| 3 | A | 485,067 | 0.136 (0.345 cm) |
| 3 | B | 485,067 | 0.136 (0.345 cm) |

Table III: (continued)

| Viscosity vs. Diameter of Dispensing Port | | | |
|---|---|---|---|
| *Test Sample* | *Test Subject* | *Viscosity (cps)* | *Min. Diameter (in.)* |
| 4 | A | 1,364,000 | 0.281 (0.714 cm) |
| 4 | B | 1,364,000 | 0.344 (0.874 cm) |
| 5 | A | 2,069,333 | 0.422 (1.072 cm) |
| 5 | B | 2,069,333 | 0.391 (0.993 cm) |

Regression of the data gave the following relationship between the viscosity of the pesticide composition and the minimum dispensing port diameter:

*viscosity = (5,995,500 cps/in.) (port diameter) - 436,270 cps*

with sample correlation, r, = 0.987 (and where 5,995,500 cps/in. = 2,360,433 cps/cm).

By applying the above regression to the more preferred range of pesticide compositions suitable for use with the invention (having viscosities less than or equal to about 1,520,000 cps), the minimum dispensing port diameter for the maximum viscosity of the preferred compositions was about 0.326 in. (0.828 cm), which was within the range that provides discrete material placement (about 0.344 in. (0.874 cm) or less).

**Claims**

1.  A method of dispensing a ready-to-use pesticide composition (12), the method comprising the steps of:

    (a) manually gripping a flexible package (10) having an opening (30) for a ready-to-use pesticide composition, the flexible package housing the ready-to-use pesticide composition, the pesticide composition being in the form of a thick semi-solid flowable composition having a viscosity between about 747 and 15,200 gm/(cm-sec) (74700 and 1,520,000 cps), wherein the flexible package is reclosable;
    (b) orienting the opening in the flexible package proximate a pesticide application area (5);
    (c) squeezing the flexible package to dispense the pesticide composition through the opening and onto the application area;
    (d) directing the pesticide composition from the opening using a finger (2) on the hand (11) gripping the flexible container; and
    (e) orienting the finger in a pocket, pouch or band (40) disposed proximate the opening in the flexible package.

2.  The method of claim 1, wherein the flexible package is disposable and is formed from one or more sheets of polymer film.

3.  The method of claim 2, further comprising the step of forming the opening the flexible package by removing a corner (32) of the flexible package.

4.  The method of claim 3, wherein the corner is located proximate an intersection of two converging edges (26, 28) on the package.

5.  The method of claim 4, wherein the converging edges from an angle of less than 90 degrees.

6.  The method of claim 3, wherein the flexible container has a perimeter with a shape selected from the group consisting of a triangle, a rectangle, a parallelogram, a trapezoid, a diamond, a pentagon, and a curved polygon.

7.  The method of claim 3, wherein the flexible package includes a single sheet of polymer film sealed along a fin seam and along its ends with the pesticide composition disposed therein.

8.  The method of claim 1, wherein the pesticide composition comprises an active ingredient diluted to use concentration with a solvent and a thickening or gelling agent.

9. The method of claim 1, wherein the pesticide composition comprises and active ingredient diluted to use concentration with a solvent, a food component, and a thickening or gelling agent.

10. The method of claim 1, wherein the opening has a diameter of abut 0.344 in. (0.874 cm) or less such that the pesticide composition may be dispensed at discrete locations of the application area.

11. A ready-to-use pesticide container comprising:

(a) a flexible package (10) being sized to be manually gripped by an operator and being reclosable including: at least one wall defining an interior chamber (13) and a dispensing port (30) in fluid communication with the interior chamber and an external pocket, pouch or band (40) disposed proximate the dispensing port;
(b) a ready-to-use pesticide composition (12) disposed within the interior chamber of the flexible package, the pesticide composition being in the form of a thick semi-solid flowable composition having a viscosity of between about 747 and 15,200 gm/(cm-sec) (74,700 and 1,520,000 cps);

wherein the dispensing port is positioned on the flexible package such that a finger (2) on an operator's hand (1) may be received in the pocket while the package is being manually gripped by the operator's hand.

12. The container of claim 11, wherein the flexible package is disposable and is formed from a single sheet of polymer film heat sealed along a fin seam and at its ends.

13. The container of claim 11, wherein the flexible package includes a plurality of edges (26, 28) disposed about a perimeter (24) of the flexible package, and wherein the dispensing port of the flexible package is opened by removing a corner from the flexible package proximate an intersection of two converging edges.

14. The container of claim 13, wherein the converging edges form an angle of less than 90 degrees.

15. The container of claim 14, wherein the converging edges from an angle of about 60 degrees.

16. The container of claim 13, wherein the perimeter of the flexible package has a shape selected from the group consisting of a triangle, a rectangle, a parallelogram, a trapezoid, a diamond, a pentagon, and a curved polygon.

17. The container of claim 13, wherein the perimeter of the flexible package is in the shape of a parallelogram.

18. The container of claim 13, wherein the converging edges do not form a conduit proximate the dispensing port.

19. The container of claim 11, wherein the dispensing port has a diameter of about 0.344 in (0.874 cm) or less.

20. The container of claim 11, wherein the pesticide composition comprises an active ingredient diluted to use concentration with a solvent and a thickening or gelling agent.

21. The container of claim 11, wherein the pesticide composition comprises an active ingredient diluted to use concentration with a solvent, a food component, and a thickening or gelling agent.


**Patentansprüche**

1. Verfahren zur Abgabe einer gebrauchsfertigen Pestizid-Zusammensetzung (12) mit folgenden Schritten:

(a) Manuelles Festhalten einer flexiblen Packung (10), die eine Öffnung (30) für eine gebrauchsfertige Pestizid-Zusammensetzung hat, wobei die flexible Packung (10) die gebrauchsfertige Pestizid-Zusammensetzung beinhaltet, wobei die Pestizid-Zusammensetzung in der Form einer dicken, halbfesten fließfähigen Zusammensetzung mit einer Viskosität zwischen ungefähr 747 und 15.200 gm/ (cm-sec) (74.700 und 1.320.000 cps) vorliegt, wobei die flexible Packung wiederverschließbar ist;

(b) Orientieren der Öffnung der flexiblen Packung nahe eines Pestizid-Anwendungsgebiets (5);

(c) Zusammendrücken der flexiblen Packung, um die Pestizid-Zusammensetzung durch die Öffnung und auf das Anwendungsgebiet abzugeben;

(d) Leiten der Pestizid-Zusammensetzung von der Öffnung, mit Hilfe eines Fingers (2) der Hand (11), die die flexible Packung festhält; und

(e) Orientieren des Fingers in eine Lasche, eine Tasche oder ein Band (40), welche nahe der Öffnung der flexiblen Packung angeordnet ist.

**2.** Verfahren nach Anspruch 1, wobei die flexible Packung eine Einwegpackung ist, und von einer oder mehreren Lagen Polymerfolie gebildet ist.

**3.** Verfahren nach Anspruch 2, welches ferner den Schritt umfasst, die Öffnung der flexiblen Packung durch Entfernen einer Ecke (32) der flexiblen Packung zu formen.

**4.** Verfahren nach Anspruch 3, wobei die Ecke nahe eines Schnittpunktes zweier zusammenlaufender Kanten (26, 28) auf der Packung angeordnet ist.

**5.** Verfahren nach Anspruch 4, wobei die zusammenlaufenden Kanten einen Winkel von weniger als 90 Grad bilden.

**6.** Verfahren nach Anspruch 3, wobei der Folienbehälter einen Umfang mit einer Form aus der Gruppe aufweist, die aus einem Dreieck, einem Rechteck, einem Parallelogramm, einem Trapez, einer Raute, einem Fünfeck und einem geschwungene Polygon besteht.

**7.** Verfahren nach Anspruch 3, wobei die flexible Packung eine einzige Lage Polymerfilm enthält, die entlang einer Längsnaht und entlang ihrer Enden versiegelt ist, wobei die Pestizid-Zusammensetzung darin enthalten ist.

**8.** Verfahren nach Anspruch 1, wobei die Pestizid-Zusammensetzung einen Wirkstoff beinhaltet, der mit einem Lösungsmittel und einem Verdickungs- oder Geliermittel auf Verwendungskonzentration verdünnt ist.

**9.** Verfahren nach Anspruch 1, wobei die Pestizid-Zusammensetzung einen Wirkstoff beinhaltet, der mit einem Lösungsmittel, einem Futterbestandteil und einem Verdickungs- oder Geliermittel auf Verwendungskonzentration verdünnt ist.

**10.** Verfahren nach Anspruch 1, wobei die Öffnung einen Durchmesser von ungefähr 0,344 in. ( 0,874 cm) oder weniger hat, so dass die Pestizid-Zusammensetzung an getrennten Orten des Anwendungsgebietes abgegeben, werden kann.

**11.** Gebrauchsfertiger Pestizid-Behälter mit:

a) einer flexiblen Packung (10) von einer Größe, um von einem Benutzer manuell festgehalten zu werden, die wiederverschließbar ist und folgendes umfaßt:
mindestens eine Wandung, die eine innere Kammer (13) und eine in fluider Verbindung mit der inneren Kammer stehende Auslassöffnung (30) und eine nahe der Auslassöffnung angeordnete externen Lasche, Tasche oder Band (40) definiert,;

b) eine in der inneren Kammer der flexiblen Packung angeordnete gebrauchsfertige Pestizid-Zusammensetzung (12), wobei die Pestizid-Zusammensetzung in der Form einer dicken, halbfesten fließfähigen Zusammensetzung mit einer Viskosität zwischen ungefähr 747 und 15.200 gm/ (cm-sec) (74.700 und 1.320.000 cps) vorliegt;

wobei die Auslass-Öffnung an der flexiblen Packung so positioniert ist, dass ein Finger (2) an einer Hand (1) eines Benutzers in der Tasche aufgenommen werden kann, während die Packung manuell von der Hand des Benutzers festgehalten wird.

**12.** Behälter nach Anspruch 11, wobei es sich um eine flexible Einwegpackung handelt und diese aus einer einzigen Lage Polymerfolie geformt ist, die entlang einer Längsnaht und an ihren Enden verschweißt ist.

13. Behälter nach Anspruch 11, wobei die flexible Packung eine Mehrzahl von um den Umfang (24) der flexiblen Packung angeordnete Kanten (26, 28) aufweist, und wobei die Auslass-Öffnung der flexiblen Packung durch das Entfernen einer Ecke der flexiblen Packung nahe des Schnittpunktes zweier zusammenlaufender Kanten geöffnet wird.

14. Behälter nach Anspruch 13, wobei die zusammenlaufenden Kanten einen Winkel von weniger als 90 Grad bilden.

15. Behälter nach Anspruch 14, wobei die zusammenlaufenden Kanten einen Winkel von ungefähr 60 Grad bilden.

16. Behälter nach Anspruch 13, wobei der Umfang der flexiblen Packung eine Form hat, die ausgewählt ist aus der Gruppe bestehend aus einem Dreieck, einem Rechteck, einem Parallelogramm, einem Trapez, einer Raute, einem Fünfeck und einem geschwungenen Polygon.

17. Behälter nach Anspruch 13, wobei der Umfang der flexiblen Packung die Form eines Parallelogramms aufweist.

18. Behälter nach Anspruch 13, wobei die zusammenlaufenden Kanten nicht einen Kanal nahe der Auslass-Öffnung bilden.

19. Behälter nach Anspruch 11, wobei die Auslass-Öffnung einen Durchmesser von ungefähr 0,344 in. ( 0,874 cm) oder weniger hat.

20. Behälter nach Anspruch 11, wobei die Pestizid-Zusammensetzung einen Wirkstoff beinhaltet, der mit einem Lösungsmittel und einem Verdickungs- oder Geliermittel auf Verwendungskonzentration verdünnt ist.

21. Behälter nach Anspruch 11, wobei die Pestizid-Zusammensetzung einen Wirkstoff beinhaltet, der mit einem Lösungsmittel, einem Futterbestandteil und einem Verdickungs- oder Geliermittel auf Verwendungskonzentration verdünnt ist.


**Revendications**

1. Procédé de distribution d'une composition de pesticide prête à l'emploi (12), le procédé comprenant les étapes consistant à :

   (a) saisir manuellement un paquet souple (10) comportant une ouverture (30) pour une composition de pesticide prête à l'emploi, le paquet souple contenant la composition de pesticide prête à l'emploi, la composition de pesticide présentant la forme d'une composition semi-solide épaisse capable de s'écouler présentant une viscosité comprise entre environ 747 et 15 200 gm/(cm-s) (74 700 et 1 520 000 cps), dans laquelle le paquet souple peut être refermé ;
   (b) orienter l'ouverture du paquet souple à proximité d'une zone d'application de pesticide (5) ;
   (c) presser le paquet souple afin de distribuer la composition de pesticide à travers l'ouverture et sur la zone d'application ;
   (d) diriger la composition de pesticide provenant de l'ouverture en utilisant un doigt (2) de la main (11) tenant le récipient souple ; et
   (e) orienter le doigt dans une poche, un sachet ou une bande (40) disposé à proximité de l'ouverture du paquet souple.

2. Procédé selon la revendication 1, dans lequel le paquet souple est jetable et est réalisé à partir d'une ou de plusieurs feuilles de film polymère.

3. Procédé selon la revendication 2, comprenant, de plus, l'étape consistant à former l'ouverture du paquet souple en enlevant un coin (32) du paquet souple.

4. Procédé selon la revendication 3, dans lequel le coin est situé à proximité d'une intersection de deux bords convergents (26, 28) sur le paquet.

5. Procédé selon la revendication 4, dans lequel les bords convergents forment un angle inférieur à 90 degrés.

**6.** Procédé selon la revendication 3, dans lequel le récipient souple a un périmètre et une forme sélectionnés parmi le groupe consistant en un triangle, un rectangle, un parallélogramme, un trapèze, un diamant, un pentagone et en un polygone incurvé.

**7.** Procédé selon la revendication 3, dans lequel le paquet souple comprend une feuille unique de film polymère scellée le long d'une fine ligne et le long de ses extrémités avec la composition de pesticide disposée à l'intérieur de celle-ci.

**8.** Procédé selon la revendication 1, dans lequel la composition de pesticide comprend un ingrédient actif dilué à une concentration d'utilisation avec un solvant et un agent épaississant ou gélifiant.

**9.** Procédé selon la revendication 1, dans lequel la composition de pesticide comprend un ingrédient actif dilué à une concentration d'utilisation avec un solvant, un composant alimentaire et un agent épaississant ou gélifiant.

**10.** Procédé selon la revendication 1, dans lequel l'ouverture a un diamètre d'environ 0,344 pouce (0,874 cm) ou moins, de sorte que la composition de pesticide puisse être distribuée à des emplacements discrets de la zone d'application.

**11.** Récipient de pesticide prêt à l'emploi comprenant :

(a) un paquet souple (10) dimensionné de manière à être saisi manuellement par un opérateur et pouvant être refermé, comprenant : au moins une paroi définissant une chambre intérieure (13) et un orifice de distribution (30) en communication fluidique avec la chambre intérieure et une poche, un sachet ou une bande externe (40) disposé à proximité de l'orifice de distribution ;
(b) une composition de pesticide prête à l'emploi (12) disposée dans la chambre intérieure du paquet souple, la composition de pesticide présentant la forme d'une composition semi-solide épaisse capable de s'écouler présentant une viscosité comprise entre environ 747 et 15 200 gm/(cm-s) (74 700 et 1 520 000 cps) ;

dans lequel l'orifice de distribution est positionné sur le paquet souple de sorte qu'un doigt (2) d'une main (1) d'un opérateur puisse être reçu dans la poche tandis que le paquet est saisi manuellement par la main de l'opérateur.

**12.** Récipient selon la revendication 11, dans lequel le paquet souple est jetable et est réalisé à partir d'une feuille unique de film polymère thermosoudée le long d'une fine ligne et à ses extrémités.

**13.** Récipient selon la revendication 11, dans lequel le paquet souple comprend une pluralité de bords (26, 28) disposés autour d'un périmètre (24) du paquet souple, et dans lequel l'orifice de distribution du paquet souple est ouvert en enlevant un coin du paquet souple à proximité d'une intersection de deux bords convergents.

**14.** Récipient selon la revendication 13, dans lequel les bords convergents forment un angle inférieur à 90 degrés.

**15.** Récipient selon la revendication 14, dans lequel les bords convergents forment un angle d'environ 60 degrés.

**16.** Récipient selon la revendication 13, dans lequel le périmètre du paquet souple présente une forme sélectionnée parmi le groupe consistant en un triangle, un rectangle, un parallélogramme, un trapèze, un diamant, un pentagone et un polygone incurvé.

**17.** Récipient selon la revendication 13, dans lequel le périmètre du paquet souple présente la forme d'un parallélogramme.

**18.** Récipient selon la revendication 13, dans lequel les bords convergents ne forment pas un conduit à proximité de l'orifice de distribution.

**19.** Récipient selon la revendication 11, dans lequel l'orifice de distribution a un diamètre d'environ 0,344 pouce (0,874 cm) ou moins.

**20.** Récipient selon la revendication 11, dans lequel la composition de pesticide comprend un ingrédient actif dilué à une concentration d'utilisation avec un solvant et un agent épaississant ou gélifiant.

21. Récipient selon la revendication 11, dans lequel la composition de pesticide comprend un ingrédient actif dilué à une concentration d'utilisation avec un solvant, un composant alimentaire et un agent épaississant ou gélifiant.

FIG.6

FIG.1

FIG.2

FIG.3

FIG.4

EP 0 841 850 B1

FIG.5a

FIG.5b

FIG.5c

FIG.5d

FIG.5e

FIG.5f

16